(19) Europäisches Patentamt
European Patent Office
Office européen des brevets

(11) Veröffentlichungsnummer : **0 408 495 B1**

(12) # EUROPÄISCHE PATENTSCHRIFT

(45) Veröffentlichungstag der Patentschrift : **13.04.94 Patentblatt 94/15**

(51) Int. Cl.$^5$ : **C07F 7/08**

(21) Anmeldenummer : **90810497.9**

(22) Anmeldetag : **03.07.90**

(54) **Substituierte Tetrachalkogenfulvalene und Verfahren zu deren Herstellung.**

(30) Priorität : **10.07.89 CH 2555/89**

(43) Veröffentlichungstag der Anmeldung : **16.01.91 Patentblatt 91/03**

(45) Bekanntmachung des Hinweises auf die Patenterteilung : **13.04.94 Patentblatt 94/15**

(84) Benannte Vertragsstaaten : **CH DE FR GB IT LI**

(56) Entgegenhaltungen :
**EP-A- 0 204 419**
**DE-A- 3 535 033**

(56) Entgegenhaltungen :
**THE JOURNAL OF ORGANIC CHEMISTRY, Band 43, JUnner- April 1978 American Chemical Society, USA N.C. GONELLA & M.P. CAVA "Organic Metals : a General Synthesis of Unsymmetrical Tetrathiafulvalenes" Seiten 369-370**

(73) Patentinhaber : **CIBA-GEIGY AG**
**Klybeckstrasse 141**
**CH-4002 Basel (CH)**

(72) Erfinder : **Mayer, Carl W., Dr.**
**Steingrubenweg 224**
**CH-4125 Riehen (CH)**
Erfinder : **Zambounis, John, Dr.**
**Dorfplatz 6**
**CH-4123 Allschwil (CH)**

EP 0 408 495 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Schutzgruppen enthaltende Tetrachalkogenfulvalene mit S oder Se als Heteroatome und ein Verfahren zu deren Herstellung durch Kopplung von verschiedenen Vinylentrichalkogencarbonaten unter Einwirkung von Trialkylphosphiten.

Es ist bekannt, dass Tetrachalkogenfulvalene $\pi$-Donoren für die Herstellung von Charge-Transfer-Komplexsalzen sind, die metallische Eigenschaften aufweisen. Hierbei sind auch im Bezug auf die Doppelbindung unsymmetrisch substituierte Tetrachalkogenfulvalene von Interesse, deren Synthese jedoch schwierig ist [N.C. Conella et al., J. Org. Chem. Vol. 43, S. 369-370 (1978)].

M.P. Cava et al. beschreiben in Annals N.Y. Academy of Science, S. 355-360 (1978) die Kopplung von mit Methoxycarbonyl substituierten Vinyltrithio- oder Vinyldithioselenocarbonaten mit Benzotrithio- oder Benzodithioselenocarbonaten unter Einwirkung von Triethylphosphit. Die gewünschten unsymmetrischen Tetrathiafulvalene werden nur in niedrigen Ausbeuten erhalten und der Anteil an den beiden anderen möglichen Kopplungsprodukten ist nur dann gering, wenn die schwer zugänglichen Selone als Ausgangsprodukte verwendet werden.

Es ist wünschenswert, Heterofulvalene bereitzustellen, die in hohen Ausbeuten und hoher Reinheit erhältlich sind und die gezielt in weitere unsymmetrische Tetrachalkogenfulvalene umgewandelt werden können.

Ein Gegenstand der Erfindung sind Verbindungen der Formel I

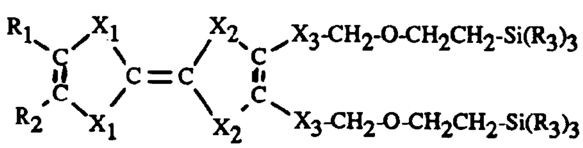

(I),

worin

$X_1$, $X_2$ und $X_3$ unabhängig voneinander für S oder Se stehen,

$R_1$ und $R_2$ unabhängig voneinander H, lineares oder verzweigtes $C_1$-$C_{18}$-Alkyl oder $C_1$-$C_{18}$-Alkyl-$X_4$- oder $R_1$ und $R_2$ zusammen

$$-(X_4)_z-C_nH_{2n}-(X_4)_z-$$

oder

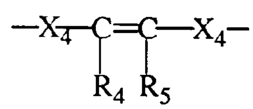

bedeuten, worin $X_4$ für S oder Se steht, z=0 und n eine ganze Zahl von 2 bis 6 oder z=1 und n eine ganze Zahl von 1 bis 4 bedeuten,

$R_4$ und $R_5$ unabhängig voneinander H oder $C_1$-$C_6$-Alkyl darstellen, und

$R_3$ lineares oder verzweigtes $C_1$-$C_{12}$-Alkyl oder Phenyl ist.

Beide $X_1$, $X_2$ oder $X_3$ stehen bevorzugt je für S oder Se. Bevorzugt stehen beide $X_4$ je für S oder Se.

$R_1$ und $R_2$ enthalten als Alkyl bevorzugt 1 bis 18, besonders 1 bis 12 und insbesondere 1 bis 8 C-Atome. Beispiele für Alkyl sind Methyl, Ethyl und die Isomeren von Propyl, Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl und Octadecyl. Besonders bevorzugt stellen $R_1$ und $R_2$ H, Methyl oder Ethyl dar.

$R_1$ und $R_2$ in der Bedeutung von Alkyl-$X_4$- enthalten bevorzugt 1 bis 18, besonders 1 bis 12 und insbesondere 1 bis 8 C-Atome. Beispiele für Alkyl sind zuvor für $R_1$ und $R_2$ angegeben. In der Gruppe Alkyl-$X_4$- sind z.B. als Alkyl, Methyl, Ethyl, n-Propyl, n-Butyl, n-Octyl, n-Dodecyl und n-Octadecyl besonders bevorzugt.

$R_1$ und $R_2$ zusammen können die Gruppe

$$-(X_4)_z-C_nH_{2n}-(X_4)_z-$$

sein. Die $X_4$ sind bevorzugt je S oder Se. Wenn z=1 ist, stellt n bevorzugt die Zahlen 1, 2 oder 3 dar, und wenn

z=0 ist, stellt n bevorzugt eine Zahl von 3 bis 5 dar. Dei Gruppe-$C_nH_{2n}$- bedeutet eine lineare oder verzweigte Alkylengruppe, bei der es sich beispielsweise um Methylen, Ethyliden 1,2-Ethylen, 1,1-, 2,2-, 1,2- oder 1,3-Propylen, 1,1-, 2,2-, 1,2-, 2,3-, 1,3- oder 1,4-Butylen, 1,1-, 2,2-, 3,3-, 1,2-, 1,3-, 1,4-, 3,4-, 2,4-, 2,5-Pentylen, 1,1-, 2,2-, 3,3-, 1,2-, 1,3-, 1,4-, 1,5-, 1,6-, 2,3-, 2,4-, 2,5-, 2,6- und 3,4-Hexylen handeln kann.

Wenn $R_1$ und $R_2$ zusammen die Gruppe

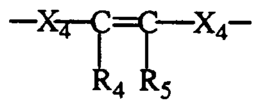

bedeuten, so stellen $R_4$ und $R_5$ bevorzugt H oder $C_1$-$C_4$-Alkyl dar. Beispiele für Alkyl sind Methyl, Ethyl, n- oder i-Propyl, n-, i- oder t-Butyl, Pentyl und Hexyl. $R_4$ und $R_5$ stellen bevorzugt H, Methyl oder Ethyl dar.

Eine bevorzugte Ausführungsform sind solche Verbindungen der Formel I, worin $R_1$ und $R_2$ H, $C_1$-$C_{18}$-Alkyl oder $C_1$-$C_{18}$-Alkyl-$X_4$- bedeuten, z=0 und n eine Zahl von 3 bis 5 oder z=1 und n die Zahlen 1 oder 2 bedeuten.

Eine andere bevorzugte Ausführungsform sind solche Verbindungen der Formel I, worin $R_1$ und $R_2$ für H oder $C_1$-$C_{18}$-Alkyl stehen, oder $C_1$-$C_{18}$-Alkyl-S- oder $C_1$-$C_{18}$-Alkyl-Se-bedeuten, oder $R_1$ und $R_2$ zusammen

$$-(X_4)_z-C_nH_{2n}-(X_4)_z-$$

darstellen, worin $X_4$ für S oder Se steht, z= 1 ist und die Gruppe -$C_nH_{2n}$- Methylen, Ethylen, 1,2-Propylen, 1,3-Propylen oder 2,3-Butylen darstellt, oder z=0 ist und die Gruppe -$C_nH_{2n}$- lineares oder verzweigtes $C_3$-$C_5$-Alkylen ist. Wenn z=0 ist, bedeutet die Gruppe -$C_nH_{2n}$- bevorzugt 1,3-Propylen oder 1,4-Butylen.

$R_3$ enthält als Alkyl bevorzugt 1 bis 6, besonders 1 bis 4 C-Atome. Einige Beispiele für Alkyl sind Methyl, Ethyl, n- oder i-Propyl, n-, i- oder t-Butyl, und die Isomeren von Pentyl, Hexyl, Heptyl, Octyl, Nonyl, Decyl, Undecyl oder Dodecyl. Die Gruppe -$Si(R_3)_3$ kann gleiche oder verschiedene Alkylreste enthalten. $R_3$ bedeutet insbesondere Methyl.

Die Verbindungen der Formel I sind in sehr reiner Form erhältlich und sie stellen wertvolle Zwischenprodukte zur Herstellung von umsymmetrischen Tetrachalkogenfulvalenen dar, die bekannterweise $\pi$-Donoren für Charge-Transfer-Komplexsalze sind. Die Silylethyloxymethylschutzgruppe kann hierbei gezielt und stufenweise durch Einwirkung von N-substituierten Ammoniumfluoriden, z.B. Tetrabutylammoniumfluorid, in Gegenwart von oder mit nachfolgender Zugabe von Alkyl- oder Aralkylhalogeniden oder Alkylendihalogeniden, besonders den Bromiden oder Iodiden, durch Alkyl, Aralkyl und Alkylen substituiert werden. Dieses Verfahren ist von V.Y. Lee in Synthetic Metals, 20 (1987), S. 161-167 beschrieben.

Charge-Transfer-Komplexsalze sind in an sich bekannter Weise durch elektrochemische Oxidation von Tetrachalkogenfulvalenen, in einer Elektrolytlösung, die Leitsalze enthält (siehe z.B. DE-A-3 504 144), erhältlich. diese Komplexsalze sind organische elektrische Leiter, die z.B. zur Herstellung von elektroaktiven Materialien oder Elektroden verwendet werden können.

Ein weiterer Gegenstand ist ein Verfahren zu Herstellung von Verbindungen der Formel I gemäss Anspruch 1, das dadurch gekennzeichnet ist, dass man eine Verbindung der Formel II

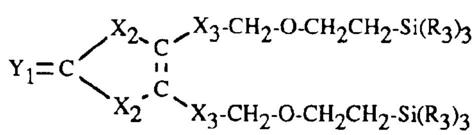 (II),

worin $Y_1$ für O, S oder Se steht, und $X_2$, $X_3$ und $R_3$ die zuvor angegebenen Bedeutungen haben, in Gegenwart eines Trialkylphosphits mit einer Verbindung der Formel III

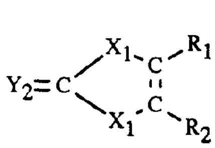 (III),

worin $Y_2$ für O, S oder Se steht und $X_1$, $R_1$ und $R_2$ die oben angegebenen Bedeutungen haben, umsetzt.

$Y_1$ steht bevorzugt für O oder S.

Das Trialkylphosphit wird zweckmässig in einer Menge von mindestens 2 Mol pro Mol Verbindung der Formel II eingesetzt. Vorteilhaft verwendet man einen Ueberschuss, der so hoch sein kann, dass das Trialkylphosphit gleichzeitig als Lösungsmittel dient.

Das Trialkylphosphit kann 3 bis 36 C-Atome und gleiche oder verschiedene Alkylgruppen enthalten. Bevorzugt verwendet man Trialkylphosphite der Formel $(C_1\text{-}C_6\text{-AlkylO})_3P$. Beispiele für Alkylgruppen sind für $R_1$ angegeben worden. Beispiele für Trialkylphosphite sind Trimethyl-, Triethyl-, Tri-n-propyl-, Tri-n-butyl-, Methyldiethyl-, Dimethylethyl-, n-Propyldimethyl- und n-Butyldimethylphosphit. Besonders bevorzugt sind Trimethyl- und Triethylphosphit.

Das Verfahren kann auch in Gegenwart von inerten Lösungsmitteln durchgeführt werden, z.B. Kohlenwasserstoffen wie z.B. Pentan, Hexan, Cyclohexan, Methylcyclohexan, Benzol, Toluol und Xylol, oder Ethern wie z.B. Diethylether, Di-n-butylether, Ethylenglykoldimethylether, Ethylenglykoldiethylether, Diethylenglykoldimethylether, Tetrahydrofuran und Dioxan.

Die Reaktionstemperatur kann z.B. 0 bis 200°C, bevorzugt 20 bis 150°C betragen.

Die Verbindungen der Formel III sind allgemein bekannt.

Die Verbindungen der Formel II können nach einen von G. Steinecke et al., Phosphorus and Sulfur, Vol. 7, S. 49-55 (1979) beschriebenen Verfahren hergestellt werden, indem man eine Zinkverbindung der Formel IV

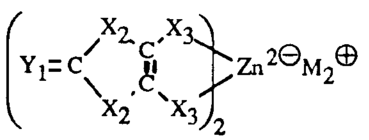

(IV),

worin $Y_1$, $X_2$ und $X_3$ die zuvor angegebenen Bedeutungen haben und M z.B. Tetraalkylammonium darstellt, mit einem Schutzgruppenreagenz der Formel

$$(R_3)_3Si\text{-}CH_2CH_2\text{-}O\text{-}CH_2\text{-}Cl$$

umsetzt. Die Herstellung der Zinkverbindungen der Formel IV ist dort ebenfalls beschrieben. Das dort beschriebene 4,5-Bis(benzoylthio)-1,3-dithiol-2-thion kann mit Quecksilber(II)acetat in das entsprechende 4,5-Bis(benzoylthio)-1,3-dithiol-2-on übergeführt werden. Die Herstellung des Schutzgruppenreagenz ist von B.H. Lipshutz et al. in Tetrahedron Letters, Vol. 21, S. 3343-3346 (1980) beschrieben.

Die Verbindungen der Formeln II und III werden mindestens in äquimolaren Mengen verwendet. Es ist vorteilhaft, einen Ueberschuss der Verbindungen der Formel II einzusetzen. Das molare Verhältnis von Verbindung der Formel II zur Verbindung der Formel III kann z.B. 10:1 bis 1:1, bevorzugt 5:1 bis 1:1 betragen.

Die Verbindungen der Formel I werden in überraschend hohen Ausbeuten erhalten, selbst wenn ein Ueberschuss der Verbindungen der Formel II verwendet wird. Die symmetrischen Kopplungsprodukte aus Verbindungen der Formel II sowie aus Verbindungen der Formel II sind im Reaktionsgemisch nur in einem überraschend geringen Anteil vorhanden. Die Ausbeuten der nicht symmetrischen Verbindungen liegen über 50 % der Theorie und sie können bis zu 90 % betragen. Die gegenüber basischen Reagenzien wie z.B. Fluoridionen empfindlichen SEM-Schutzgruppen werden von den basischen Trialkylphosphiten nicht abgebaut, im Gegensatz zu anderen bekannten S- oder Se-Schutzgruppen.

Die Verbindungen der Formel I können aus den Reaktionsgemischen in hoher Reinheit isoliert werden, was für die Reproduzierbarkeit der elektrischen Eigenschaften der Charge-Transfer-Komplexsalze der nicht symmetrischen Tetrachalkogenfulvalene von grosser Bedeutung ist.

Die Isolierung erfolgt bevorzugt mittels Adsorptionschromatographie, mit der auf einfache Weise eine sehr gute Trennung ohne grosse Ausbeuteverluste erzielt werden kann. Als stationäre Phase werden bevorzugt Silicagele verwendet. Als Laufmittel verwendet man bevorzugt unpolare aprotische Lösungsmittel oder Lösungsmittelgemische. Beispiele sind aliphatische, cycloaliphatische und aromatische Kohlenwasserstoffe wie z.B. Pentan, Hexan, Octan, Cyclopentan, Cyclohexan, Methylcyclohexan, Benzol, Toluol und Xylol.

Ein weiterer Gegenstand der Erfindung sind die Verbindungen der Formel II

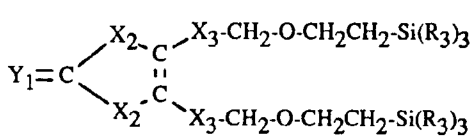

(II),

worin

$Y_1$ für O, S oder Se steht,
$X_2$ S oder Se bedeutet,
$X_3$ S oder Se darstellt, und
$R_3$ lineares oder verzweigtes $C_1$-$C_{12}$-Alkyl oder Phenyl bedeutet.

Für $X_2$, $X_3$ und $R_3$ gelten die für die Verbindungen der Formel I angegebenen Bevorzugungen. Besonders bevorzugt sind solche Verbindungen der Formel II, worin beide $X_2$ oder $X_3$ je für S oder Se stehen und $R_3$ Methyl bedeutet.

Die nachfolgenden Beispiele erläutern die Erfindung näher. Die Temperatur ist, wenn nicht anders erwähnt, in Grad Celsius angegeben. SEM bedeutet Trimethylsilylethoxymethyl. THF ist Tetrahydrofuran.

A) Herstellung von Ausgangsprodukten

Beispiel A1: Herstellung von

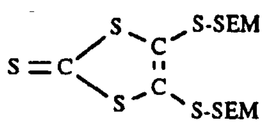

Zu einer gesättigten Lösung von 9,42 g (10 mmol) [Tetrabutylammonium]$_2$[Zn(4,5-Dimerkaptoisotrithion)$_2$] in trockenem Tetrahydrofuran wird unter Argon eine Lösung von 7,1 ml (40 mmol) 2-(Trimethylsilyl)-ethoxymethylchlorid [=SEM-chlorid] in 10 ml Tetrahydrofuran innerhalb von 10 Minuten zugegeben. Die tief purpurrote Lösung wird dabei gelb, und $ZnCl_2$ fällt aus. Darauf wird das Lösungsmittel am Wasserstrahlvakuum entfernt und der Rückstand auf einer Kieselgelsäule (50 cm lang, 4 cm Durchmesser, 250 g $SiO_2$) mit Methylenchlorid chromatographiert. Das erste leuchtend gelbe Band enthält die gewünschte Verbindung. Die Ausbeute ist praktisch quantitativ (9 g, gelb-oranges Oel). NMR ($CDCl_3$), $ppm_{TMS}$: 0,05 (9H, -$Si(CH_3)_3$), 0,95-1,01 (2H, T), 3,65-3,75 (2H, T), 4,88 (2H, S).

Beispiel A2: Herstellung von

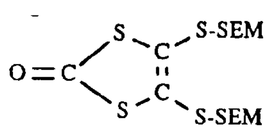

2,5 g (6,16 mmol) Bis-Benzoyldimerkapto-isotrithion werden in einem Gemisch von 100 ml Methylenchlorid und 100 ml Eisessig bei Raumtemperatur gelöst. Dazu werden 3,18 g (10 mmol) Quecksilber(II)acetat auf einmal zugegeben und das Gemisch während einer Stunde kräftig gerührt. Dabei ändert sich die Farbe der Lösung von gelb-orange nach farblos. Zugleich entsteht ein weisser Niederschlag. Das Reaktionsgemisch wird über eine G4-Nutsche filtriert, mit 100 ml Methylenchlorid nachgewaschen und das Filtrat dreimal mit 200 ml Wasser ausgeschüttelt. Die organische Phase wird nach dem Trocknen mit Magnesiumsulfat am Wasserstrahlvakuum eingedampft. Das Bis-Benzoyl-dimerkaptoisodithio-2-on (2,16 g, 89 %) bildet weisse Nadeln mit einem Schmelzpunkt von 112°C.

1,95 g (5 mmol) dieses Zwischenprodukts werden unter Argon in 25 ml Methanol suspendiert und dazu wird tropfenweise innerhalb von 20 Minuten eine Lösung von Natriummethanolat [0,23 g (10 mmol) Na in 4,6 ml Methanol] zugegeben. Nach Beendigung der Zugabe wird die orange Lösung weitere 20 Minuten gerührt, und dann eine Lösung von 0,34 g $ZnCl_2$ in 2,5 ml Methanol und 2,5 ml 25%-igem wässrigem Ammoniak zugetropft. Zur entstandenen dunkelorangen Lösung wird unter Rühren eine konzentrierte Lösung von Tetraphenylphosphonium-bromid zugegeben, wobei der Phosphoniumkomplex

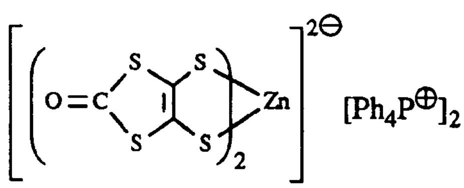

als gelber Festkörper ausfällt. Nach 15 Minuten wird abgenutscht, mit Methanol, Wasser, Isopropanol und schliesslich mit Ether gewaschen. Es werden 2,67 g (87 %) Produkt isoliert; Umkristallisieren aus Aceton ergibt

gelbe Nadeln mit einem Schmelzpunkt von 234-235°C.

Für die weitere Umsetzung wird das Rohprodukt eingesetzt: 2,2 g (1,9 mMol) davon werden in minimaler Menge Methylenchlorid gelöst; dazu werden unter Inertgas 1,41 ml (8 mMol) 2-(Trimethylsilyl)-ethoxymethylchlorid, gelöst in 3 ml Methylenchlorid, zugetropft. Nach 30 Minuten Rühren wird das Lösungsmittel unter Vakuum entfernt und der Rückstand an Kieselgel (250 g) mit Dichlormethan chromatographiert. Das farblose Produkt tritt als erstes aus der Kolonne aus. Es ist ein viskoses Oel.

NMR ($CDCl_3$) $ppm_{(TMS)}$: 0,05 (9H, $(CH_3)_3Si$-), 0,95-1,01 (2H, T), 3,65-3,75 (2H, t), 4,88 (2H, S).

Beispiel A3: Herstellung von

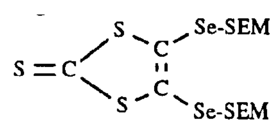

a) 10 g (0,074 Mol) Vinylentrithiocarbonat, gelöst in 40 ml trockenem Tetrahydrofuran, werden mit 0,15 Mol Lithiumisopropylamid [aus 21,2 ml (0.15 Mol) Diisopropylamin gelöst in 100 ml trockenem Tetrahydrofuran und 100 ml (0.16 Mol) Butyllithium (1,6M)] bei -75°C unter Argon zum Bis-Lithium-vinylentrithiocarbonat umgesetzt. Zu dessen gelben Suspension werden, ebenfalls bei -75°C, auf einmal 11,8 g (0,15 Mol) Selen gegeben und die Reaktionsmischung unter ständigem Rühren über Nacht auf Raumtemperatur auftauen gelassen. Nach Abdampfen des Tetrahydrofurans erhält man

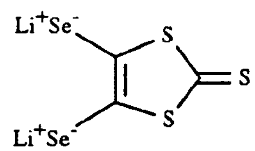

als oranges Oel. Diese wird in 160 ml trockenem Methanol gelöst. Innert 15 Minuten werden darauf 8,85 g (0,065 Mol) Zinkchlorid, gelöst in 60 ml Methanol und 60 ml 25 % Ammoniak, zugetropft, für 10 Minuten gerührt, ungelöste Rückstände abfiltriert und zu dieser Lösung innert 15 Minuten 24 g (0,075 Mol) Tetrabutylammoniumbromid, gelöst in 30 ml Methanol zugegeben. Dabei fällt ein rotes Pulver aus. Dieses wird abgesaugt, mit wenig eiskaltem Methanol, Isopropanol, Wasser, nochmals Isopropanol und abschliessend mit Diethylether gewaschen. Man erhält 32,37 g (92 % der Theorie) des Komplexes

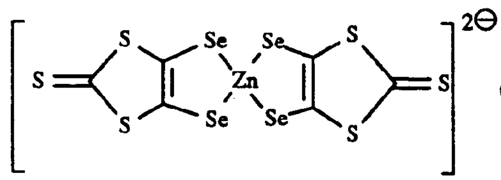 (Tetrabutylammonium$^{\oplus}$)$_2$.

b) Die Titelverbindung erhält man gemäss Beispiel A1 durch Umsetzung dieses Komplexes mit SEM-chlorid.

Beispiel A4: Herstellung von

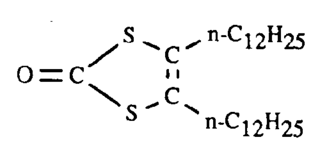

a) Acyloinkondensation von Tridecansäure-methylester zu

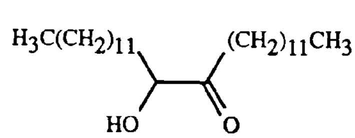

Die Herstellung dieser Verbindung erfolgt analog des von V.L.Hansley in J.A.C.S. 57, 2303, (1935) beschriebenen Verfahren. Nach der Aufarbeitung wird das Rohprodukt (16 g, 81 % der Theorie aus einem 0,05 Mol Ansatz bezüglich Produkt) zusätzlich zuerst aus heissem Aethanol (40 ml) umkristallisiert und die bei Raumtemperatur ausgefallene Verbindung (10,6 g) über eine Säule (8 cm Durchmesser 50 cm Länge) an Kieselgel zunächst mit Dichlormethan anschliessend mit Diethylether chromatografiert. Das reine Produkt (10,2 g weisse Nadeln) hat einen Schmelzpunkt von 66-69°C.

b) Chlorierung des Acyloins zu

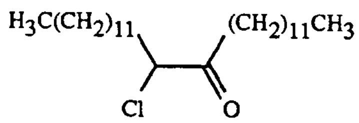

Eine Lösung von 10 g (0,025 Mol) des Acyloins aus a) und 2,95 mol (0,037 Mol) Pyridin in 260 ml Dichlormethan wird tropfenweise innert 1 Stunde zu einer eisgekühlten Lösung von 2,35 ml (0,031 Mol) Thionylchlorid und 0,75 ml (0,009 Mol) Pyridin in 35 ml Dichlormethan zugegeben. Die Lösung wird über Nacht bei Raumtemperatur gerührt und dann mit 100 ml Eiswasser gekühlt. Die organische Phase wird dreimal mit je 100 ml Wasser gewaschen, mit $Na_2SO_4$ getrocknet und im Vakuum eingedampft. Das ölige Rohprodukt wird über eine Säule (8 cm Durchmesser, 50 cm Länge) an Kieselgel und Dichlormethan:Hexan (1:2) als Laufmittel chromatografiert. Die erste Fraktion besteht aus reinem Produkt, 7,3 g (ca. 70 % der Theorie); weisse Kreistalle mit einem Schmelzpunkt von 42-44°C.

c) Herstellung von

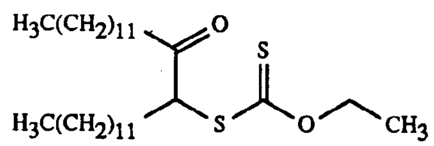

Eine Suspension von 7 g (0,017 Mol) des α-Chloroketons aus b) und 2,71 g (0,017 Mol) Kalium-ethylxanthogenat in 150 ml Aceton werden über Nacht bei Raumtemperatur unter Feuchtigkeitsausschluss gerührt. Das Reaktionsgemisch wird filtriert und das Filtrat danach mit 2 l Wasser versetzt. Das abgeschiedene Oel wird mit 400 ml Diethylether extrahiert, die Lösung getrocknet und eingedampft. Es bleiben 8 g (ca. 95 % der Theorie) eines schwach gelben Oels zurück, das über eine kleine Flash-Säule (4 cm Durchmesser, 25 cm Länge) mit Dichlormethan gereinigt wird. MS FD: $M^+ = 500$.

d) Herstellung von

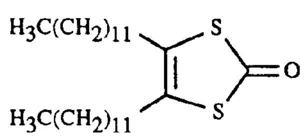

7,9 g des Xanthogenates aus c) werden in 40 ml von 30%-igen Bromwasserstoff in Essigsäure während 2 Stunden bei Raumtemperatur gerührt. Danach wird mit 300 ml Wasser versetzt und das abgeschiedene Oel wird dreimal mit je 100 ml Diethylether extrahiert. Die organische Phase wird dreimal mit je 200 ml Wasser gewaschen, getrocknet und eingedampft. Das resultierende Oel wird weiter am Hochvakuum getrocknet: 6,8 g (ca. 93 % der Theorie) leicht gelbliches Oel. MS: $M^+ = 454$ (100 %).

Beispiel A5: Herstellung von

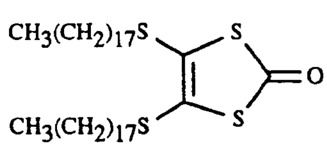

2,7 g (0,0029 Mol) des Zinkkomplexes gemäss Beispiel A1 werden in 140 ml Aceton gelöst und 5,7 g (ca.

0,0043 Mol) 1-Brom-octadecan dazugegeben. Die Lösung wird während 4 Tagen bei Raumtemperatur gerührt und der ausgeschiedene zitronengelbe Festkörper wird abfiltriert und wiederholt mit Wasser und Aceton gewaschen. Ausbeute 4 g (ca. 100 % der Theorie); Schmelzpunkt 78°C. Das erhaltene Thioketon wird analog Beispiel A2 mit Quecksilberacetat ins Keton übergeführt: Ausbeute 72 %. Weisse Kristalle, Schmelzpunkt 71-72°C.

Beispiel A6: Herstellung von

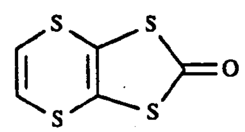

Die Verbindung wird nach dem von K.S. Varma et al. in Physica 143B, S. 321 (1986) beschriebenen Verfahren hergestellt. Schmelzpunkt 123-125°C.

B) Herstellung von SEM-geschützten Tetrachalkogenfulvalenen

Beispiel B1: Herstellung von

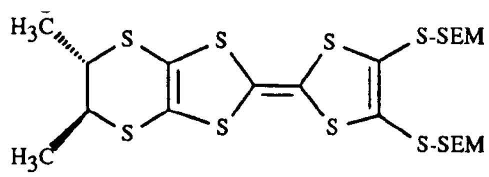

780 mg (3,3 mMol

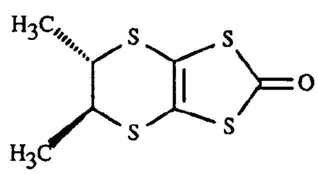

[siehe Helvetica Chimica Acta, Vol. 69, S. 69-70 (1986)] und 3,03 g (6,6 mMol) der Verbindung gemäss Beispiel A1 werden unter Argon in 17 ml frisch destilliertem Triethylphosphit gelöst und die Lösung unter Rühren für 3,5 Stunden auf 105°C erwärmt. Nachdem die Lösung auf Zimmertemperatur abgekühlt ist, wird das Triethylphosphit am Hochvakuum abgedampft. Der so erhaltene ölige Rückstand wird am Kieselgel mit Benzol-Hexan (2:1) eluiert. Die orange Frontzone ergibt 52 mg Tetramethyl-bis-ethylendithio-tetrathiafulvalen, die mittlere rote Zone 1,9 g (89 %) des gewünschten Produktes als Oel und die letzte ziegelrote Zone 700 mg Tetra-S-SEM-tetrathiafulvalen (orange Nadeln).

UV ($CH_3CN$) nm: 470, 375(sh), 337(sh), 312, 299(sh), 250(sh), 229;

MS (m/e): 646 ($M^+$, 11 %), 73 ($(CH_3)_3Si$-, 100 %).

Beispiel B2: Herstellung von

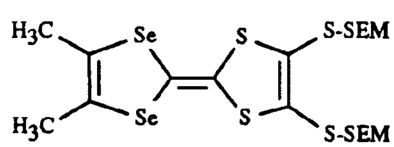

450 mg (1,4 mMol) Dimethylvinylen-triselenocarbonat [K. Bechgaard et al., J. Org. Chem., 1983, (48), 388-389] und 1,92 g (4,2 mMol) der Verbindung gemäss Beispiel A1 werden in 10 ml frisch destilliertem Triethylphosphit gelöst und unter Argon 3,5 Stunden bei 105°C gerührt. Nach dem Abkühlen wird das überschüssige Triethylphosphit am Hochvakuum entfernt. Das resultierende dunkelrote viskose Oel wird an Kieselgel (500 g) mit einem Benzol-Hexan-Gemisch (2:1) chromatographiert. Die erste violette Bande ergibt 20 mg (6 %) Tetramethyltetraselenofulvalen. Die nachfolgende rote Bande enthält 380 mg (37 %) der gewünschten Verbindung, ein ziegelrotes Oel, das nach einigen Tagen ziegelrote Nädelchen mit einem Schmelzpunkt von 68-69°C ergibt.

Beispiele B3 bis B11: Es wird wie in Beispiel B1 verfahren. Das Molverhältnis der Verbindungen A zu B (siehe Tabelle 1) beträgt 1:2 (in den Beispielen B5 und B8-B10 1:1). In den Beispielen B7 und B11 wird Benzol als Lösungsmittel verwendet. Das theoretische Verhältnis der Verbindungen AB:AA:BB im Reaktionsgemisch beträgt 50:20:30 (50:25:25 in den Beispielen B5 und B8-B10). Die Ergebnisse sind in nachfolgender Tabelle 1 zusammengefasst.

Tabelle 1:

| | Verbindung A | Verbindung B | Verhältnis AB:AA:BB (experimentell) |
|---|---|---|---|
| B1 | 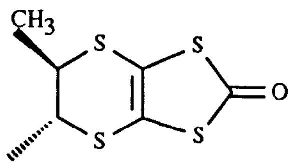 | 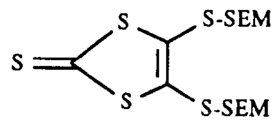 | 78:2:20 |
| B2 | 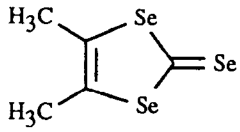 | 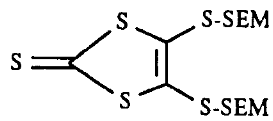 | 15:1:* |
| B3 | 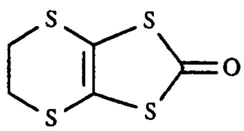 | 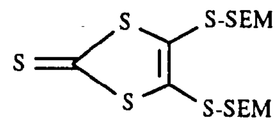 | 79:2:19 |
| B4 | 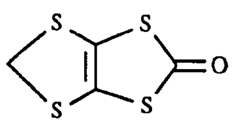 | 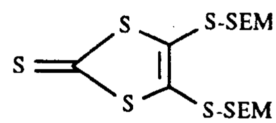 | 76:2:22 |
| B5 | 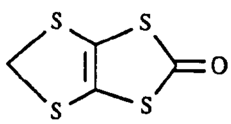 | 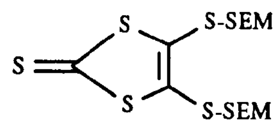 | 95:1:4 |
| B6 | 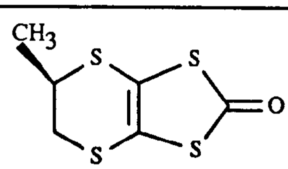 | 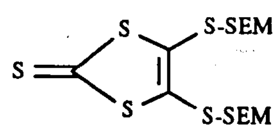 | 77:2:21 |
| B7 | 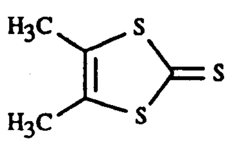 | 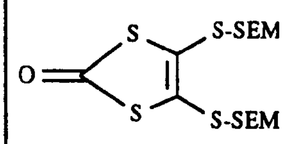 | 15:1:* |
| B8 | 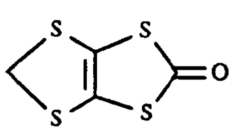 | 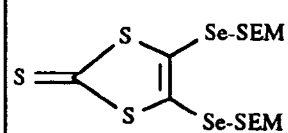 | 91:4:5 |
| B9 | 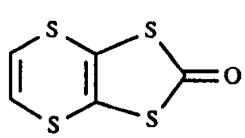 | 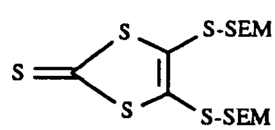 | 86:4:10 |

Tabelle 1 (Fortsetzung)

| | Verbindung A | Verbindung B | Verhältnis AB:AA:BB (experimentell) |
|---|---|---|---|
| B10 | 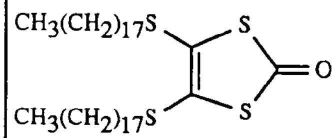 | 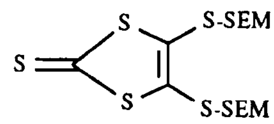 | 71:19:10 |
| B11 | 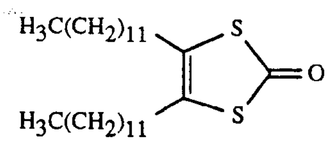 | 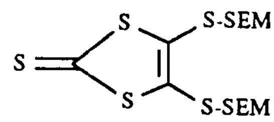 | 18:0:82 |

* nicht isoliert

C) Herstellung von unsymmetrischen Tetrachalkogenfulvalenen

Beispiel C1: Herstellung von

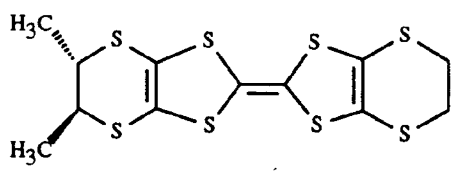

244 mg (0,38 mMol) der Verbindung von Beispiel B1 werden in 27 ml trockenem Tetrahydrofuran gelöst. Dazu werden unter Argon 0,16 ml (1,9 mMol) 1,2-Dibromethan und 1,7 ml Tetrabutylammoniumfluorid Lösung in THF (1,0 m Lösung) tropfenweise zugegeben. Nach vier Tagen Rühren bei Raumtemperatur wird das Lösungsmittel am Rotationsverdampfer abgedampft und der Rückstand an einer Kieselgelsäule chromatographiert. Elutionsmittel ist ein 2:1 Gemisch von Benzol und Hexan. Die Frontzone ergibt 11 mg der Titelverbindung als orange Kristalle mit einem Schmelzpunkt von 203°C.

Beispiel C2: Herstellung von

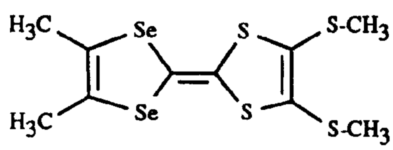

140 mg (0,21 mMol) der Verbindung gemäss Beispiel B2 werden in 2 ml trockenem Tetrahydrofuran unter Argon gelöst, mit 5 ml 1 molarer Tetrabutylammoniumflorid-Lösung in THF versetzt. Die Farbe der Reaktionslösung wechselt rasch nach dunkelrot.

Nach einstündigem Rühren wird langsam Methyljodid zugetropft, bis die Farbe hell orange geworden ist. Ein Ueberschuss an Methyljodid führt zu einer Ausfällung an Tetrabutylammoniumjodid und verhindert die Entfernung der zweiten SEM-Gruppe. Wird ein solcher Ueberschuss vermieden, nimmt die Lösung wieder eine dunkelrote Farbe an (Abspaltung der zweiten SEM-Gruppe). Nach weiteren 30 Minuten wird wieder Methyljodid zugetropft, bis die Farbe hell orange ist. Nachdem auf dem Dünnschichtchromatogramm (Kieselgel; Benzol-Hexan 1:1) nur noch der eine Flecken des gewünschten Produktes sichtbar ist, wird das Lösungsmittel am Wasserstrahlvakuum abgedampft und der Rückstand über Kieselgel (350 g) chromatographiert. Elutionsmittel ist Methylenchlorid. Die orange rote Bande ergibt 85 mg (94 %) des gewünschten Produktes als ziegelrote Kristalle mit einem Schmelzpunkt von 100°C.

Beispiel C3: Herstellung von

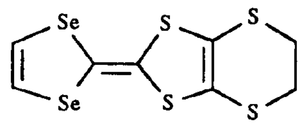

Gemäss Beispiel B2 werden Vinyltriselenocarbonat und die Verbindung gemäss Beispiel A1 zur Verbindung

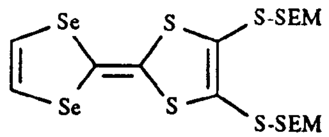

umgesetzt. Diese Verbindung wird gemäss Beispiel C2 mit 1,2-Dibromethan umgesetzt. Man erhält die Titelverbindung als orange Nadeln mit einem Schmelzpunkt von 208°C (Ausbeute 30 %).

Beispiel C4: Herstellung von

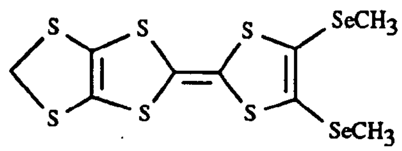

Die Umsetzung der Verbindung von Beispiel B8 gemäss Beispiel C2 ergibt die Titelverbindung.

Beispiel C5: Herstellung von

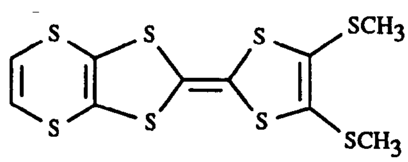

Die Umsetzung der Verbindung von Beispiel B9 gemäss Beispiel C2 ergibt die Titelverbindung mit einem Schmelzpunkt von 117°C.

Beispiel C6: Herstellung von

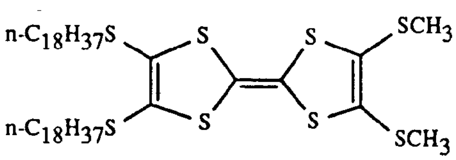

Die Umsetzung der Verbindung von Beispiel B10 gemäss Beispiel C2 ergibt die Titelverbindung mit einem Schmelzpunkt von 72°C.

Beispiel C7: Herstellung von

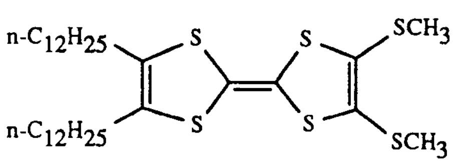

Die Umsetzung der Verbindung von Beispiel B11 gemäss Beispiel C2 ergibt die Titelverbindung mit einem Schmelzpunkt von 65°C.

D) Herstellung von Charge-Transfer-Komplexsalzen

Beispiel D1: Herstellung von

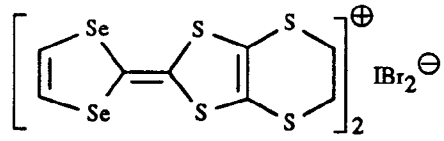

15 mg Verbindung gemäss Beispiel C3 werden in den Anodenraum einer Elektrolysezelle von 30 ml Volumen eingefüllt. Als Leitelektrolyt werden 80 mg Tetrabutylammonium-$IBr_2$ unter Argon in die Zelle eingefüllt. Als Lösungsmittel wird Dichlormethan verwendet. Nach vierstündigem Stehen der Zelle wird ein Strom von 0,5 µA eingestellt (Pt-Draht-Elektroden 1 x 20 mm). Nach einer Woche können die schwarzen Plättchen der Titelverbindung isoliert werden.

Die elektrische Leitfähigkeit dieses Komplexes beträgt $\sigma_{RT} = 10^3$ $ohm^{-1}$ $cm^{-1}$. Beim Abkühlen auf 2K nimmt sie um einen Faktor von ca. 12,5 zu, wobei kein Uebergang in einen halbleitenden Zustand beobachtet wird.

**Patentansprüche**

1. Verbindungen der Formel I

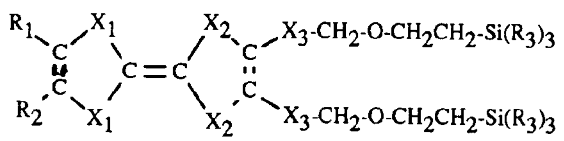

(I),

worin
$X_1$, $X_2$ und $X_3$ unabhängig voneinander für S oder Se stehen,
$R_1$ und $R_2$ unabhängig voneinander H, lineares oder verzweigtes $C_1$-$C_{18}$-Alkyl oder $C_1$-$C_{18}$-Alkyl-$X_4$- oder $R_1$ und $R_2$ zusammen

$$-(X_4)_z-C_nH_{2n}-(X_4)_z-$$

oder

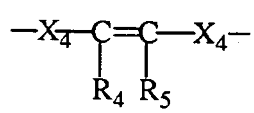

bedeuten, worin $X_4$ für S oder Se steht, z=0 und n eine ganze Zahl von 2 bis 6 oder z=1 und n eine ganze Zahl von 1 bis 4 bedeuten,
$R_4$ und $R_5$ unabhängig voneinander H oder $C_1$-$C_6$-Alkyl darstellen, und
$R_3$ lineares oder verzweigtes $C_1$-$C_{12}$-Alkyl oder Phenyl ist.

2. Verbindungen gemäss Anspruch 1, worin beide $X_1$, $X_2$ oder $X_3$ je für S oder Se stehen.

3. Verbindung gemäss Anspruch 1, worin $R_1$ und $R_2$ H, $C_1$-$C_{18}$-Alkyl oder $C_1$-$C_{18}$-Alkyl-$X_4$-bedeuten, z=0 und n eine Zahl von 3 bis 5 oder z=1 und n die Zahlen 1, 2 oder 3 bedeuten.

4. Verbindungen gemäss Anspruch 1, worin $R_4$ und $R_5$ H, Methyl oder Ethyl bedeuten.

5. Verbindungen gemäss Anspruch 1, worin $R_3$ $C_1$-$C_4$-Alkyl darstellt.

6. Verbindungen gemäss Anspruch 5, worin $R_3$ für Methyl steht.

7. Verbindungen gemäss Anspruch 1, worin $R_1$ und $R_2$ für H oder $C_1$-$C_{18}$-Alkyl stehen oder $C_1$-$C_{18}$-Alkyl-S- oder $C_1$-$C_{18}$-Alkyl-Se- bedeuten, oder $R_1$ und $R_2$ zusammen

$$-(X_4)_z-C_nH_{2n}-(X_4)_z-$$

darstellen, worin $X_4$ für S oder Se steht, z=1 ist und die Gruppe -$C_nH_{2n}$- Methylen, Ethylen, 1,2-Propylen, 1,3-Propylen oder 2,3-Butylen darstellt, oder z=0 ist und die Gruppe -$C_nH_{2n}$- lineares oder verzweigtes $C_3$-$C_5$-Alkylen ist.

8. Verbindungen gemäss Anspruch 7, worin z=0 ist und die Gruppe -$C_nH_{2n}$ 1,3-Propylen oder 1,4-Butylen ist.

9. Verfahren zur Herstellung von Verbindungen der Formel I gemäss Anspruch 1, dadurch gekennzeichnet, dass man eine Verbindung der Formel II

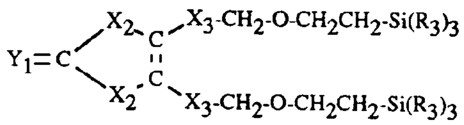

(II),

worin $Y_1$ für O, S oder Se steht, und $X_2$, $X_3$ und $R_3$ die in Anspruch 1 angegebenen Bedeutungen haben, in Gegenwart eines Trialkylphosphits mit einer Verbindung der Formel III

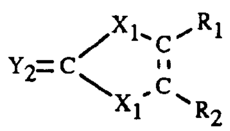

(III),

worin $Y_2$ für O, S oder Se steht und $X_1$, $R_1$ und $R_2$ die in Anspruch 1 angegebenen Bedeutungen haben, umsetzt.

10. Verfahren gemäss Anspruch 9, dadurch gekennzeichnet, dass man das Trialkylphosphit im Ueberschuss verwendet, bezogen auf die Verbindung der Formel II.

11. Verfahren gemäss Anspruch 10, dadurch gekennzeichnet, dass man das Trialkylphosphit als Lösungsmittel verwendet.

12. Verfahren gemäss Anspruch 9, dadurch gekennzeichnet, dass das Trialkylphosphit der Formel $(C_1$-$C_6$-$AlkylO)_3P$ entspricht.

13. Verfahren gemäss Anspruch 12, dadurch gekennzeichnet, dass es sich beim Trialkylphosphit um Trimethyl- oder Triethylphosphit handelt.

14. Verfahren gemäss Anspruch 9, dadurch gekennzeichnet, dass man die Verbindung der Formel II im Ueberschuss verwendet.

15. Verfahren gemäss Anspruch 9, dadurch gekennzeichnet, dass das molare Verhältnis der Verbindungen der Formel II zu den Verbindungen der Formel III 10:1 bis 1:1 beträgt.

16. Verfahren gemäss Anspruch 9, dadurch gekennzeichnet, dass die Umsetzung bei einer Temperatur von 0 bis 200°C durchgeführt wird.

17. Verfahren gemäss Anspruch 9, dadurch gekennzeichnet, dass man die reine Verbindung der Formel I mittels Adsorptionschromatographie isoliert.

18. Verfahren gemäss Anspruch 17, dadurch gekennzeichnet, dass man als Laufmittel unpolare aprotische Lösungsmittel oder Lösungsmittelgemische verwendet.

**19.** Verbindungen der Formel II

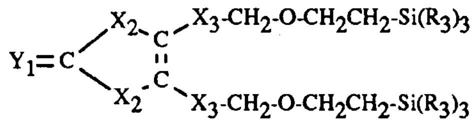

(II),

worin
$Y_1$ für O, S oder Se steht,
$X_2$ S oder Se bedeutet,
$X_3$ S oder Se darstellt, und
$R_3$ lineares oder verzweigtes $C_1$-$C_{12}$-Alkyl oder Phenyl bedeutet.

**20.** Verbindungen gemäss Anspruch 19, worin beide $X_2$ oder $X_3$ je für S oder Se stehen und $R_3$ Methyl bedeutet.

## Claims

**1.** A compound of the formula I

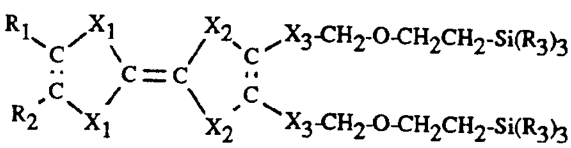

(I)

in which $X_1$, $X_2$ and $X_3$, independently of one another, are S or Se, $R_1$ and $R_2$, independently of one another, are H, linear or branched $C_1$-$C_{18}$alkyl or $C_1$-$C_{18}$alkyl-$X_4$- or $R_1$ and $R_2$ together are $-(X_4)_z-C_nH_{2n}-(X_4)_z-$ or

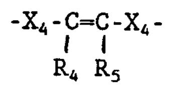

in which $X_4$ is S or Se, z is 0 and n is an integer from 2 to 6 or z is 1 and n is an integer from 1 to 4, $R_4$ and $R_5$, independently of one another, are H or $C_1$-$C_6$alkyl, and $R_3$ is linear or branched $C_1$-$C_{12}$alkyl or phenyl.

**2.** A compound according to claim 1, in which both $X_1$, $X_2$ or $X_3$ are S or Se.

**3.** A compound according to claim 1, in which $R_1$ and $R_2$ are H, $C_1$-$C_{18}$alkyl or $C_1$-$C_{18}$alkyl-$X_4$-, z is 0 and n is a number from 3 to 5 or z is 1 and n represents the numbers 1, 2 or 3.

**4.** A compound according to claim 1, in which $R_4$ and $R_5$ are H, methyl or ethyl.

**5.** A compound according to claim 1, in which $R_3$ is $C_1$-$C_4$alkyl.

**6.** A compound according to claim 5, in which $R_3$ is methyl.

**7.** A compound according to claim 1, in which $R_1$ and $R_2$ are H or $C_1$-$C_{18}$ alkyl or $C_1$-$C_{18}$alkyl-S- or $C_1$-$C_{18}$alkyl-Se-, or $R_1$ and $R_2$ together are $-(X_4)_z-C_nH_{2n}-(X_4)_z-$ in which $X_4$ is S or Se, z is 1 and the group $-C_nH_{2n}-$ is methylene, ethylene, 1,2-propylene, 1,3-propylene or 2,3-butylene, or z is 0 and the group $-C_nH_{2n}-$ is linear or branched $C_3$-$C_5$alkylene.

**8.** A compound according to claim 7, in which z is 0 and the group $-C_nH_{2n}-$ is 1,3-propylene or 1,4-butylene.

**9.** A process for the preparation of compounds of the formula I according to claim 1, wherein a compound

of the formula II

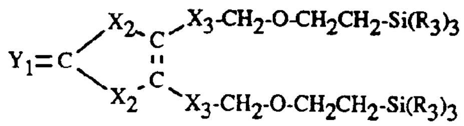

(II)

in which $Y_1$ is 0, S or Se and $X_2$, $X_3$ and $R_3$ are as defined in claim 1 is reacted in the presence of a trialkyl phosphite with a compound of the formula III

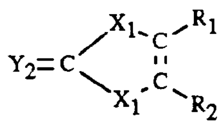

(III)

in which $Y_2$ is 0, S or Se and $X_1$, $R_1$ and $R_2$ are as defined in claim 1.

**10.** A process according to claim 9, wherein the trialkyl phosphite is used in excess relative to the compound of the formula II.

**11.** A process according to claim 10, wherein the trialkyl phosphite is used as solvent.

**12.** A process according to claim 9, wherein the trialkyl phosphite has the formula $(C_1\text{-}C_6alkylO)_3\text{-}P$.

**13.** A process according to claim 12, wherein the trialkyl phosphite is trimethyl or triethyl phosphite.

**14.** A process according to claim 9, wherein the compound of the formula II is used in excess.

**15.** A process according to claim 9, wherein the molar ratio of the compounds of the formula II to the compounds of the formula III is 10:1 to 1:1.

**16.** A process according to claim 9, wherein the reaction is carried out at a temperature from 0 to 200°C.

**17.** A process according to claim 9, wherein the pure compound of the formula I is isolated by means of adsorption chromatography.

**18.** A process according to claim 17, wherein non-polar aprotic solvents or solvent mixtures are used as mobile phase.

**19.** A compound of the formula II

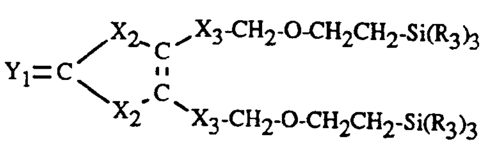

(II)

in which $Y_1$ is 0, S or Se and $X_2$ is S or Se, $X_3$ is S or Se, and $R_3$ is linear or branched $C_1$-$C_{12}$alkyl or phenyl.

**20.** A compound according to claim 19, in which both $X_2$ or $X_3$ are each S or Se and $R_3$ is methyl.

## Revendications

**1.** Composés de formule I :

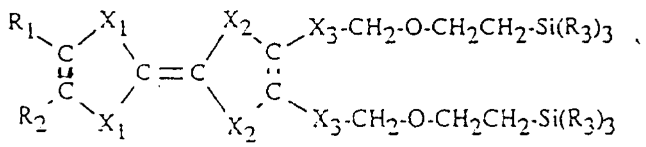 (I),

dans laquelle :

$X_1$, $X_2$ et $X_3$, indépendamment les uns des autres, sont chacun S ou Se,

$R_1$ et $R_2$, indépendamment l'un de l'autre, sont chacun H ou un radical alkyle en $c_1$ a $c_{18}$ ou (alkyle en $C_1$ à $C_{18}$)-$X_4$- à chaîne droite ou ramifiée, ou encore $R_1$ et $R_2$ forment ensemble

$$-(X_4)_z-C_nH_{2n}-(X_4)_z-$$

ou

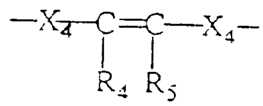

où $X_4$ est S ou Se, z=0 et n est un entier de 2 à 6, ou encore z=1 et n est un entier de 1 à 4,

$R_4$ et $R_5$, indépendamment l'un de l'autre, sont chacun H ou un radical alkyle en $C_1$ à $C_6$, et

$R_3$ est un radical alkyle en $C_1$ à $C_{12}$ à chaîne droite ou ramifiée, ou phényle.

2. Composés selon la revendication 1, dans lesquels les deux radicaux $X_1$, $X_2$ ou $X_3$ sont chacun S ou Se.

3. Composés selon la revendication 1, dans lesquels $R_1$ et $R_2$ sont chacun H ou un radical alkyle en $C_1$ à $C_{18}$ ou (alkyle en $C_1$ à $C_{18}$)-$X_4$-, z=0 et n est un nombre de 3 à 5, ou z=1 et n représente les nombres 1, 2 ou 3.

4. Composés selon la revendication 1, dans lesquels $R_4$ et $R_5$ sont chacun H ou le radical méthyle ou éthyle.

5. Composés selon la revendication 1, dans lesquels $R_3$ est un radical alkyle en $C_1$ à $C_4$.

6. Composés selon la revendication 5, dans lesquels $R_3$ est le radical méthyle.

7. Composés selon la revendication 1, dans lesquels $R_1$ et $R_2$ sont chacun H ou un radical alkyle en $C_1$ à $C_{18}$ ou encore (alkyle en $C_1$ à $C_{18}$)-S- ou (alkyle en $C_1$ à $C_{18}$)-Se-, ou encore $R_1$ et $R_2$ forment ensemble le radical

$$-(X_4)_z-C_nH_{2n}-(X_4)_z-$$

où $X_4$ est S ou Se, z=1 et le groupe $-C_nH_{2n}-$ est le radical méthylène, éthylène, 1,2-propylène, 1,3-propylène ou 2,3-butylène, ou z=0 et le groupe $-C_nH_{2n}-$ est un radical alkylène en $C_3$ à $C_5$ à chaîne droite ou ramifiée.

8. Composés selon la revendication 7, dans lesquels z=0 et le groupe $-C_nH_{2n}-$ est le radical 1,3-propylène ou 1,-4-butylène.

9. Procédé pour préparer les composés de formule I selon la revendication 1, caractérisé en ce qu'on fait réagir un composé de formule II :

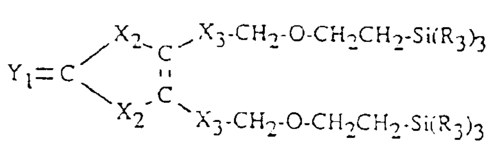 (II),

dans laquelle $Y_1$ est O, S ou Se, et $X_2$, $X_3$ et $R_3$ ont les significations données dans la revendication 1, en

présence d'un phosphite de trialkyle, avec un composé de formule III

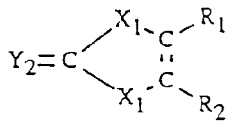

(III),

dans laquelle $Y_2$ est O, S ou Se, et $X_1$, $R_1$ et $R_2$ ont les significations données dans la revendication 1.

**10.** Procédé selon la revendication 9, caractérisé en ce qu'on utilise le phosphite de trialkyle en excès par rapport au composé de formule II.

**11.** Procédé selon la revendication 10, caractérisé en ce qu'on utilise comme solvant le phosphite de trialkyle.

**12.** Procédé selon la revendication 9, caractérisé en ce que le phosphite de trialkyle a la formule (alkyle en $C_1$ à $C_6$-O$)_3$P.

**13.** Procédé selon la revendication 12, caractérisé en ce que le phosphite de trialkyle est le phosphite de triméthyle ou le phosphite de triéthyle.

**14.** Procédé selon la revendication 9, caractérisé en ce qu'on utilise le composé de formule II en excès.

**15.** Procédé selon la revendication 9, caractérisé en ce que le rapport en moles des composés de formule II aux composés de formule III est de 10:1 à 1:1.

**16.** Procédé selon la revendication 9, caractérisé en ce que la réaction est mise en oeuvre à une température de O à 200 °C.

**17.** Procédé selon la revendication 9, caractérisé en ce qu'on isole le composé de formule I pur par chromatographie d'adsorption.

**18.** Procédé selon la revendication 17, caractérisé en ce qu'on utilise comme éluant des solvants ou des mélanges de solvants aprotiques, non polaires.

**19.** Composés de formule II

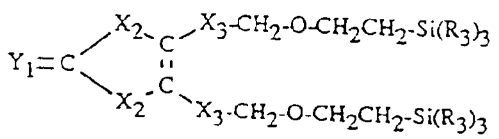

(II),

dans laquelle :
$Y_1$ est O, S ou Se,
$X_2$ est S ou Se,
$X_3$ est S ou Se, et
$R_3$ est un radical alkyle en $C_1$ à $C_{12}$ à chaîne droite ou ramifiée, ou phényle.

**20.** Composés selon la revendication 19, dans lesquels les deux radicaux $X_2$ ou $X_3$ sont chacun S ou Se, et $R_3$ est le radical méthyle.